# EUROPEAN PATENT APPLICATION

(11) **EP 2 819 143 A1**
(43) Date of publication of application: **31.12.2014**
(21) Application number: 14173644.7
(22) Date of filing: 24.06.2014
(51) Int. Cl.: H01H 33/662, H02B 13/035

(54) **Tank-type vacuum circuit breaker**

(30) Priority: 25.06.2013 JP 2013132410; 08.08.2013 JP 2013164633
(71) Applicant: Kabushiki Kaisha Toshiba, Tokyo 105-8001 (JP)
(72) Inventor: Shioiri, Tetsu, Tokyo, 105-8001 (JP); Fujii, Yuuki, Tokyo, 105-8001 (JP); Asari, Naoki, Tokyo, 105-8001 (JP); Sato, Junichi, Tokyo, 105-8001 (JP); Kubota, Nobutaka, Tokyo, 105-8001 (JP)
(74) Representative: Hoffmann Eitle

(57) **Abstract**

According to one embodiment, a tank-type vacuum circuit breaker includes a tank (1), a vacuum valve (2) provided in the tank (1), an insulating layer (9) provided on an outer circumference of the vacuum valve (2), having a fixed side interface connecting portion (10) and a movable side interface connecting portion (11), a grounding layer (15) provided on an outer circumference of the insulating layer (9), a fixed side bushing having an interface connecting portion (20) connected to the fixed side interface connecting portion (10), a fixed side porcelain tube (18) to house the fixed side bushing, a movable side bushing having an interface connecting portion (26) connected to the movable side interface connecting portion (11), a movable side porcelain tube (24) to house the movable side bushing, and insulation gas filled in the tank (1) at an approximately atmospheric pressure.

## Description

### CROSS-REFERENCE TO RELATED APPLICATIONS

This application is based upon and claims the benefit of priority from the prior Japanese Patent Applications No. 2013-132410, filed on July 25, 2013, and No. 2013-164633, filed on August 8, 2013, the entire contents of which are incorporated herein by reference.

### FIELD

Embodiments described herein relate generally to a tank-type vacuum circuit breaker.

### BACKGROUND

Conventionally, insulation gas such as SF6 gas is filled in a tank at a prescribed pressure in a tank-type vacuum circuit breaker, to perform reinforcement of the external insulation of a vacuum valve. However, environmentally, it is required to severely manage SF6 gas, to cause maintenance and inspection work to be difficult.

On the other hand, in accordance with high voltage of a vacuum valve, a vacuum valve is known whose outer circumference is molded with insulation material such as epoxy resin, to reinforce the external insulation. In this resin molded vacuum valve, an interface connecting portion to make insulators to be firmly adhered to each other is provided, and a power cable and an insulation bus of indoor specifications are connected to this resin molded vacuum valve.

By these means, when a vacuum valve is molded with insulation material to reinforce the external insulation, and is housed in a tank, it becomes possible to eliminate insulation gas such as SF6 gas. However, the connection of the main circuit is the connection to a power cable and an insulation bus of indoor specifications, and thereby it can not be performed to receive power from overhead lines, that is one of the features of a tank type. For the reason, a tank-type vacuum circuit breaker has been desired in which the external insulation of a vacuum valve is reinforced, and which can draw power from overhead lines.

In addition, it is said that such a tank-type vacuum circuit breaker has, in addition to a breaking function to receive power from overhead lines and perform opening and closing of a power system, a disconnecting function to perform bus current switching, and a ground opening and closing function to perform induction current opening and closing. However, the tank-type vacuum circuit breaker has any of the functions solely, and when a plurality of the functions are required, a plurality of tank-type vacuum circuit breakers having the respective functions have been required.

On the other hand, a vacuum valve is known which houses a contact for breaking and a contact for ground opening and closing in a vacuum insulation vessel, and has a breaking function and a ground opening and closing function. However, such a vacuum insulation vessel is housed in a box body, and receives power from a power cable, and is applied to an intermediate voltage class not more than a rated voltage of 30 kV.

By the above-described reasons, in a tank-type vacuum circuit breaker which receives power from overhead lines and is applied to a high voltage class of not less than a rated voltage of 60 kV, a tank-type vacuum circuit breaker has been desired which reinforces the external insulation of a vacuum valve to eliminate insulation gas such as SF6 gas, and is made an environment consideration type, and has both the breaking function and the ground opening and closing function. When the tank-type vacuum circuit breaker is composed of a composite function type, it can reduce the installation area, compared with a single function type. An environmental consideration type and a composite function like these are recent trends.

### BRIEF DESCRIPTION OF THE DRAWINGS

Fig. 1 is a sectional view showing a configuration of a tank-type vacuum circuit breaker according to a first embodiment.
Fig. 2 is a sectional view showing a configuration of a tank-type vacuum circuit breaker according to a second embodiment.
Fig. 3 is a sectional view showing a configuration of a tank-type vacuum circuit breaker according to a third embodiment.
Fig. 4 is a sectional view showing a configuration of a tank-type vacuum circuit breaker according to a fourth embodiment.

### DETAILED DESCRIPTION

According to one embodiment, a tank-type vacuum circuit breaker includes a tank, a vacuum valve provided in the tank, having a pair of contacts, an insulating layer provided on an outer circumference of the vacuum valve, having a fixed side interface connecting portion and a movable side interface connecting portion, a grounding layer provided on an outer circumference of the insulating layer, a fixed side bushing having an interface connecting portion connected to the fixed side interface connecting portion, a fixed side porcelain tube to house the fixed side bushing, a movable side bushing having an interface connecting portion connected to the movable side interface connecting portion, a movable side porcelain tube to house the movable side bushing, and insulation gas filled in the tank, the fixed side porcelain tube, and the movable side porcelain tube at an approximately atmospheric pressure.

According to another embodiment, a tank-type vacuum circuit breaker includes a tank, a first vacuum valve provided in the tank, a fixed side electrode fixed to a fixed side of the first vacuum valve, a movable side electrode fixed to a movable side of the first vacuum valve, an insulating layer provided on outer circumferences of the first vacuum valve, the fixed side electrode, and the movable side electrode, having a fixed side interface connecting portion and a movable side interface connecting portion, a grounding layer provided on an outer circumference of the insulating layer, a fixed side bushing having an interface connecting portion connected to the fixed side interface connecting portion, a movable side bushing having an interface connecting portion connected to the movable side interface connecting portion, a ground opening and closing rod which moves in a ground opening and closing cavity portion provided at a fixed side of the insulating layer, and contacts to and separates from the fixed side electrode, an insulation operation rod which moves in an opening and closing operation cavity portion provided at a movable side of the insulating layer, and is coupled to a movable shaft of the first vacuum valve, and insulation gas filled in the tank suitable for the environment.

Hereinafter, further embodiments will be described with reference to the drawings.

### [First embodiment]

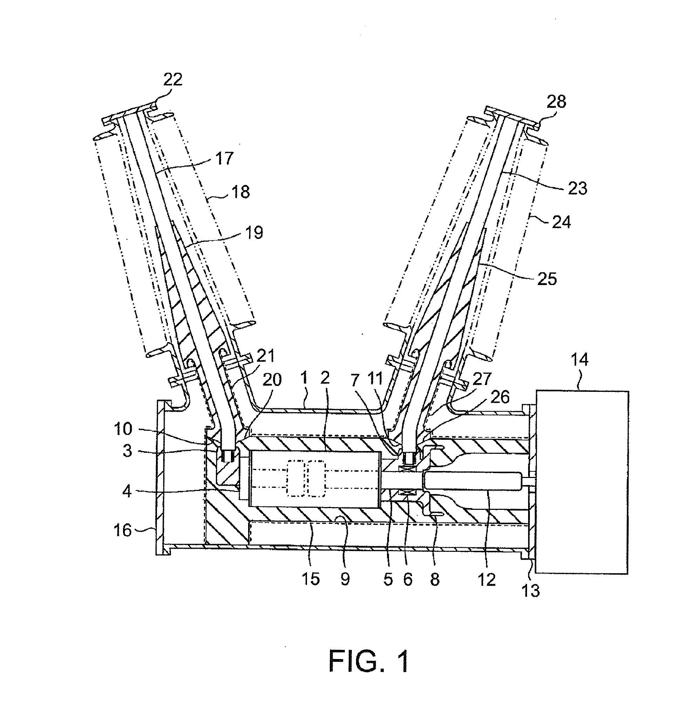

To begin with, a tank-type vacuum circuit breaker according to a first embodiment will be described with reference to Fig. 1. Fig. 1 is a sectional view showing a configuration of the tank-type vacuum circuit breaker according to the first embodiment.

As shown in Fig. 1, a vacuum valve 2 having a pair of contacts which are free to contact and separate in an axial direction is provided in a cylindrical tank 1 made of metal. A fixed side electrode 4 having a concave fixed side connecting portion 3 is fixed to a fixed side of the vacuum valve 2. A movable side electrode 8 is fixed to a movable side of the vacuum valve 2. The movable side electrode 8 has a contact 6 which slides on a movable shaft 5 on the inner circumference, and a concave movable side connecting portion 7 on the outer circumference.

An insulating layer 9 formed by molding epoxy resin is provided around the vacuum valve 2, the fixed side electrode 4, the movable side electrode 8, and so on. In the insulating layer 9, a tapered fixed side interface connecting portion 10 which exposes an electrode at the center is formed, at the fixed side connecting portion 3, and a tapered movable side interface connecting portion 11 which exposes an electrode at the center is formed, at the movable side connecting portion 7. A cavity portion is formed at the end portion of the insulating layer 9 of the movable side, and an insulation operation rod 12 with one end coupled to the end of the movable shaft 5 is provided. The other end penetrates through a flange 13 which blocks one end opening portion of the tank 1, and is coupled to an operation mechanism 14.

A movable side end of the insulating layer 9 is fixed to the flange 13, and a fixed side thereof is fixed to an inner surface of the tank 1 at the lower portion shown in the drawing. On the outer circumference of the insulating layer 9, a grounding layer 15 coated with conductive paint is provided at the portion shown by a dotted line, except the fixed side interface connecting portion 10, and the movable side interface connecting portion 11. The other end opening portion of the tank 1 is blocked by a flange 16.

A fixed side central conductor 17 is connected to the fixed side connecting portion 3, and penetrates through inside a fixed side porcelain tube 18. The fixed side porcelain tube 18 is fitted, at a slant, into an opening hole at the upper left portion shown in the drawing of the tank 1. A fixed side insulating layer 19 molded with epoxy resin is provided around the fixed side central conductor 17, and the fixed side insulating layer 19 at the fixed side connecting portion 3 side forms a convex fixed side interface connecting portion 20, which is made to firmly adhere to the fixed side interface connecting portion 10. A fixed side grounding layer 21 coated with conductive paint is provided around the fixed side insulating layer 19, at the portion indicated by a dotted line. The portion where the fixed side insulating layer 19 faces a flange portion of the fixed side porcelain tube 18 is formed into a ring shape with a curved cross section, and the fixed side grounding layer 21 is provided on its inner surface (electric field relaxing means at the fixed side grounding layer 21 end). The portion of the fixed side insulating layer 19 inside the fixed side porcelain tube 18 constitutes creeping insulation. A fixed side external electrode 22 which is to be connected to an overhead line is provided at a tip of the fixed side porcelain tube 18.

A movable side central conductor 23 is connected to the movable side connecting portion 7, and penetrates through inside a movable side porcelain tube 24. The movable side porcelain tube 24 is fitted, at a slant, into an opening hole at the upper right portion shown in the drawing of the tank 1. A movable side insulating layer 25 molded with epoxy resin is provided around the movable side central conductor 23, and the movable side insulating layer 25 at the movable side connecting portion 7 side forms a convex movable side interface connecting portion 26, which is made to firmly adhere to the movable side interface connecting portion 11. A movable side grounding layer 27 coated with conductive paint is provided around the movable side insulating layer 25, at the portion indicated by a dotted line. The portion where the movable side insulating layer 27 faces a flange portion of the movable side porcelain tube 24 is formed into a ring shape with a curved cross section, and the movable side grounding layer 27 is provided on its inner surface (electric field relaxing means at the movable side grounding layer 27 end). The portion of the movable side insulating layer 25 inside the movable side porcelain tube 24 constitutes creeping insulation. A movable side external electrode 28 which is to be connected to an overhead line is provided at a tip of the movable side porcelain tube 24.

Any insulation gas suitable for the environment such as dry air, nitrogen gas, carbon dioxide gas is filled in the tank 1 at a positive pressure of an approximately atmospheric pressure. The cavity portion housing the insulation operation rod 12 is also filled with the similar insulation gas. In addition, a through-type current transformer may be provided at each of the outer circumferences of the fixed side porcelain tube 18, the movable side porcelain tube 24.

Here, members composed of the fixed side central conductor 17, the fixed side insulating layer 19, the fixed side interface connecting portion 20, the fixed side grounding layer 21, and so on are defined as a fixed side bushing having the interface connecting portion. In addition, members composed of the movable side central conductor 23, the movable side insulating layer 25, the movable side interface connecting portion 26, the movable side grounding layer 27, and so on are defined as a movable side bushing having the interface connecting portion.

The external insulation of the vacuum valve 2 can be reinforced by these means. In addition, the fixed side bushing, the movable side bushing are respectively housed in the fixed side porcelain tube 18, the movable side porcelain tube 24, and thereby power can be led in from overhead lines. In addition, since in the fixed side bushing, the movable side bushing, the electric field relaxing means are respectively provided at the portions facing the fixed side porcelain tube 18, the movable side porcelain tube 24, the electric field relaxation of the fixed side bushing, the movable side busing themselves, and the electric field relaxation at the grounding sides of both of the fixed side porcelain tube 18, the movable side porcelain tube 24 can be performed simultaneously.

In addition, when dielectric constants of the fixed side insulating layer 19, the movable side insulating layer 25 are made larger than those of the fixed side porcelain tube 18, the movable side porcelain tube 24, respectively, the electric field distributions extending in the outer circumferential direction become gentle, and the electric field relaxation at the creeping insulation portions can be achieved. When the fixed side porcelain tube 18, the movable side porcelain tube 24 are further filled with insulation gas with a generally low dielectric strength suitable for the environment at an approximately atmospheric pressure, it is possible to improve the withstand voltage property. When the fixed side insulating layer 19, the movable side insulating layer 25 are made of epoxy resin, the dielectric constants can be made 4 - 6 respectively, and the fixed side porcelain tube 18, the movable side porcelain tube 24 are made of a polymer, the dielectric constants can be made 2 - 3, respectively.

In addition, when the gap between the fixed side insulating layer 19 and the fixed side porcelain tube 18, and the gap between the movable side insulating layer 25 and the movable side porcelain tube 24 are made larger than insulation thicknesses of the fixed side porcelain tube 18 and the movable side porcelain tube 24, respectively, it is possible to prevent an increase in electrical field by a short gap including a minute gap.

In addition, the electric relaxing means at the grounding side may be made the ground potential by embedding ring-like embedded shields into the fixed side insulating layer 19, the movable side insulating layer 25, respectively.

According to the tank-type vacuum circuit breaker of the first embodiment, since the insulating layer 9 having the fixed side interface connecting portion 10, the movable side interface connecting portion 11 is provided on the outer circumference of the vacuum valve 2, and the fixed side bushing, the movable side bushing which are housed in the fixed side porcelain tube 18, the movable side porcelain tube 24 are respectively connected to the fixed side interface connecting portion 10, the movable side interface connecting portion 11, it is possible to reinforce the external insulation, and in addition, when insulation gas suitable for the environment is filled in the tank 1, it is possible to obtain good withstand voltage property. In addition, it is possible to receive power from overhead lines to the molded vacuum valve 2. Since the tank 1 becomes a non-pressure vessel, and the tank 1 can be made to have a simple and light-weight structure.

### [Second embodiment]

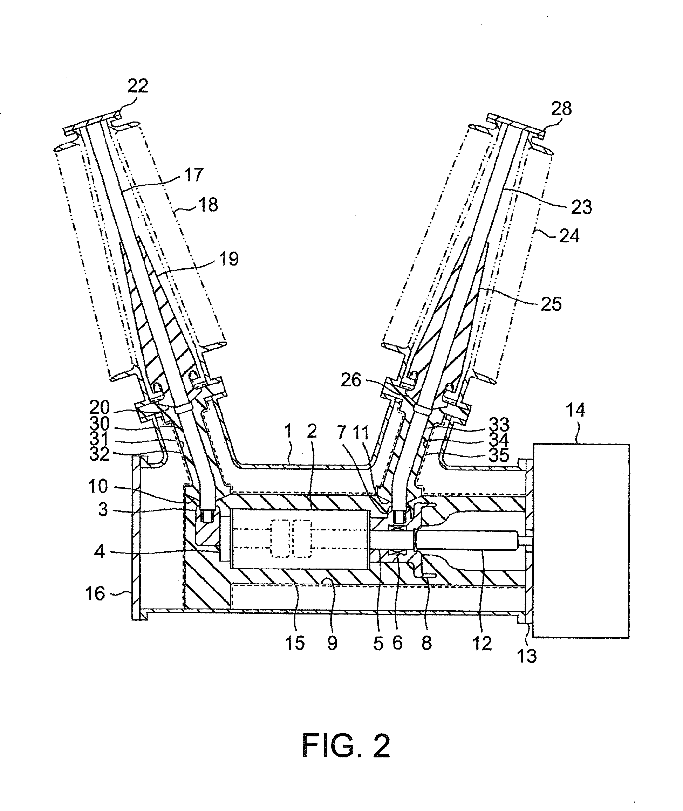

Next, a tank-type vacuum circuit breaker according to a second embodiment will be described with reference to Fig. 2. Fig. 2 is a sectional view showing a configuration of the tank-type vacuum circuit breaker according to the second embodiment. In addition, the point that the second embodiment is different from the first embodiment is that coupling conductors are provided between the vacuum valve and the porcelain tubes. In Fig. 2, the same symbols are given to the same constituent portions as the first embodiment, and the detailed description thereof will be omitted.

As shown in Fig. 2, a bent fixed side coupling conductor 30 is connected to the fixed side connecting portion 3, and is connected to the fixed side central conductor 17. A fixed side coupling insulating layer 31 is provided on the outer circumference of the fixed side coupling conductor 30, and a fixed side coupling grounding layer 32 is provided on the outer circumference thereof. Both ends of the fixed side coupling insulating layer 31 form interface connecting portions, and one end is firmly adhered to the movable side interface connecting portion 10, and the other end is firmly adhered to the fixed side interface connecting portion 20. In addition, the whole of the fixed side bushing composed of the fixed side central conductor 17, the fixed side insulating layer 19, the fixed side interface connecting portion 20, the fixed side grounding layer 21, and so on is to be housed in the fixed side porcelain tube 18.

A bent movable side coupling conductor 33 is connected to the movable side connecting portion 7, and is connected to the movable side central conductor 23. A movable side coupling insulating layer 34 is provided on the outer circumference of the movable side coupling conductor 33, and a movable side connecting grounding layer 35 is provided on the outer circumference thereof. Both ends of movable side coupling insulating layer 34 form interface connecting portions, and one end is firmly adhered to the movable side interface connecting portion 11, and the other end is firmly adhered to the movable side interface connecting portion 26. In addition, the whole of the movable side bushing composed of the movable side central conductor 23, the movable side insulating layer 25, the movable side interface connecting portion 26, the movable side grounding layer 27, and so on is to be housed in the movable side porcelain tube 24.

In the first embodiment, the long-sized fixed side central conductor 17, the movable side central conductor 23 are bent, but in the second embodiment, they can be made linear by this means. Since the bent fixed side coupling conductor 30, the movable side coupling conductor 33 are short-sized, they can be manufactured easily, to thereby improve assembly property.

In addition, when stranded wires are respectively used as the fixed side coupling conductor 30, the movable side coupling conductor 33, and the fixed side coupling insulating layer 31, the movable side coupling insulating layer 34 are composed of rubber, polyethylene, or the like, they can be provided with flexibility, to thereby improve assembly property more.

According to the above-described tank-type vacuum circuit breaker of the second embodiment, assembly property thereof can be improved, in addition to the effect by the first embodiment,

According to the above-described embodiments, since the vacuum valve molded with an insulating material is housed in the tank, the fixed side bushing, and the movable side bushing having the interface connecting portions are connected to the vacuum valve, and the main circuit is derived to the outside through the porcelain tubes, the external insulation of the vacuum valve can be reinforced, and thereby power can be led in from overhead lines. In addition, the tank can be made a non-pressure vessel which is filled with gas suitable for the environment.

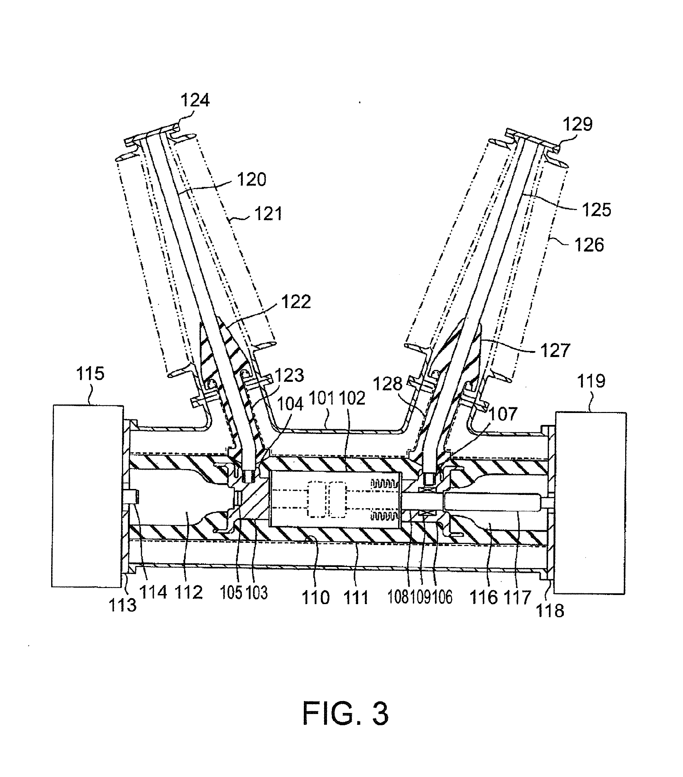

To begin with, a tank-type vacuum circuit breaker according to a third embodiment will be described with reference to Fig. 3. Fig. 3 is a sectional view showing a configuration of the tank-type vacuum circuit breaker according to the third embodiment.

As shown in Fig. 3, a first vacuum valve 102 having a pair of contacts which are free to contact and separate in an axial direction is provided in a cylindrical tank 101 made of metal. A columnar fixed side electrode 103 is fixed to a fixed side of the first vacuum valve 102. In the fixed side electrode 103, a fixed side connecting portion 104 projecting toward a side surface at an upper portion shown in the drawing, and a grounding electrode portion 105 which is recessed in an axial surface facing the first vacuum valve 102 are provided. A cylindrical movable side electrode 106 is fixed to a movable side of the first vacuum valve 102. In the movable side electrode 6, a movable side connecting portion 107 projecting toward a side surface at an upper portion shown in the drawing is provided, and a movable shaft 8 of the first vacuum valve 102 movably penetrates through an inner circumferential portion of the movable side electrode 106 through a contact 109.

An insulating layer 110 formed by molding epoxy resin is provided around the fixed side electrode 103, the first vacuum valve 102, the movable side electrode 106. A grounding layer 111 coated with conductive paint is provided on an outer circumference of the insulating layer 110, as shown by a dotted line, except interface connecting portions described later.

At the fixed side electrode 103 side of the insulating layer 110, the fixed side connecting portion 104 forms a fixed side interface connection portion which is recessed in a taper shape, and a cylindrical ground opening and closing cavity portion 112 is arranged on the same axis as the first vacuum valve 102. The ground electrode portion 105 exposes to the ground opening and closing cavity portion 112. The insulating layer 110 end of the ground opening and closing cavity portion 112, and one opening end of the tank 101 are fixed to a flange 113. A ground opening and closing rod 114 which freely moves in the ground opening and closing cavity portion 112, and contacts to or separates from the grounding electrode portion 105 is provided at a central opening portion of the flange 113. The ground opening and closing rod 114 is coupled to a grounding operation mechanism 115, and is connected to a grounding electrode.

At the movable side electrode 106 side of the insulating layer 110, the movable side connecting portion 107 forms a movable side interface connection portion which is recessed in a taper shape, and a cylindrical opening and closing operation cavity portion 116 is arranged on the same axis as the first vacuum valve 102. An insulation operation rod 117 coupled to the movable shaft 108 is movably arranged in the opening and closing operation cavity portion 116. The insulating layer 110 end of the opening and closing operation cavity portion 116, and the other opening end of the tank 101 are fixed to a flange 118. An operating shaft coupled to the insulation operation rod 117 penetrates through the central opening of the flange 118, and is coupled to as opening and closing operation mechanism 119.

A fixed side conductor 120 is connected to the fixed side connecting portion 104, and penetrates through a fixed side porcelain tube 121. The fixed side porcelain tube 121 is fitted, at a slant into an opening hole at the upper left portion shown in the drawing of the tank 101. A fixed side insulating layer 122 molded with epoxy resin is provided around the fixed side conductor 120, and the lower side portion shown in the drawing forms an interface connecting portion, and is firmly adhered to a fixed side interface connecting portion provided in the insulating layer 110. A fixed side grounding layer 123 coated with conductive paint is provided around the fixed side insulating layer 122 as shown by a dotted line. The portion of the fixed side insulating layer 122 inside the fixed side porcelain tube 121 constitutes creeping insulation. A fixed side external electrode 124 which is to be connected to one overhead line is provided at a tip of the fixed side porcelain tube 121.

A movable side conductor 125 is connected to the movable side connecting portion 107, and penetrates through a movable side porcelain tube 126. The movable side porcelain tube 126 is fitted, at a slant into an opening hole at the upper right portion shown in the drawing of the tank 101. A movable side insulating layer 127 molded with epoxy resin is provided around the movable side conductor 125, and the lower side portion shown in the drawing forms an interface connecting portion, and is firmly adhered to a movable side interface connecting portion provided in the insulating layer 110. A movable side grounding layer 128 coated with conductive paint is provided around the movable side insulating layer 127, as shown by a dotted line. The portion of the movable side insulating layer 127 inside the movable side porcelain tube 126 constitutes creeping insulation. A movable side external electrode 129 which is to be connected to the other overhead line is provided at a tip of the movable side porcelain tube 126.

In the tank 101, and in the porcelain tubes 121, 126, any insulation gas suitable for the environment such as dry air, nitrogen gas, carbon dioxide gas is filled at a positive pressure. The grounding opening and closing cavity portion 112 and the opening and closing operation cavity portion 116 are similarly filled with the gas. In addition, at each of the outer circumferences of the porcelain tubes 121, 126, a through-type current transformer can be provided.

By this means, the external insulation of the first vacuum valve 102 can be reinforced by the insulating layer 110, and also in the tank-type vacuum circuit breaker which is applied to a high voltage class of not less than a rated voltage of 60 kV, insulation gas suitable for the environment having a lower dielectric strength than SF6 gas can be filled. The insulation thickness of the insulating layer 110, and the creeping insulation distances of the insulating layers 122, 127 should be selected, depending on the applicable voltage class. Bing provided with the fixed side porcelain tube 121, the movable side porcelain tube 126, the tank-type vacuum circuit breaker can be installed outdoors, and can receive power from overhead lines. In addition, since the tank-type vacuum circuit breaker is provided with a breaking function of a power system by the first vacuum valve 102, and a ground opening and closing function provided with the ground opening and closing rod 114 which contacts to and separates from the grounding electrode portion 105, a composite function of the equipments can be achieved.

Regarding the equipment arrangement, the ground opening and closing rod 114, the first vacuum valve 102, the insulation operation rod 117 are arranged on the same axis, and since the members are symmetrically arranged with the first vacuum valve 102 as the boundary, the operation force of the opening and closing function and the ground opening and closing function can be received by the insulating layer 110 with good balance. In addition, having the breaking function by means of the first vacuum valve 102, the tank-type vacuum circuit breaker has a disconnecting function in current opening and closing. Since an inter-electrode withstand voltage is imposed in the disconnecting function, the tank-type vacuum circuit breaker has only to have a gap length larger than the one having breaking function, for example.

The integrated insulating layer 110 is provided from the ground opening and closing cavity portion 112 to the first vacuum valve 102, the opening and closing operation cavity portion 116, but the insulating layer 110 may be divided for the ground opening and closing cavity portion 112, the first vacuum valve 102, and the opening and closing operation cavity portion 116, and the divided portions may be connected by means of the respective interface connecting portions. By this means, switching of a vacuum valve with the breaking function and the disconnecting function can be performed easily.

Here, members composed of the fixed side conductor 120, the fixed side insulating layer 122, the fixed side grounding layer 123, and so on, are defined as a fixed side bushing having the interface connecting portion. In addition, members composed of the movable side conductor 125, the movable side insulating layer 125, the movable side grounding layer 128, and so on are defined as a movable side bushing having the interface connecting portion.

According to the tank-type vacuum circuit breaker of the third embodiment, since the insulating layer 110 is provided on the outer circumference of the first vacuum valve 102, and the fixed side bushing which is housed in the fixed side porcelain tube 121 is connected to the fixed side, and the movable side bushing which is housed in the movable side porcelain tube 126 is connected to the fixed side, the external insulation of the first vacuum valve 102 can be reinforced, and the tank-type vacuum circuit breaker can be applied to a high voltage class of not less than a rated voltage of 60 kV also by insulating gas suitable for the environment. In addition, the tank-type vacuum circuit breaker can be made to have the breaking function by the first vacuum valve 102, and the ground opening and closing function by the ground electrode portion 105 provided in the fixed side electrode 103 and the movable ground opening and closing rod 114. It is possible to reduce an installation area of the tank-type vacuum circuit breaker by composite functionalization of the equipments.

### [Fourth embodiment]

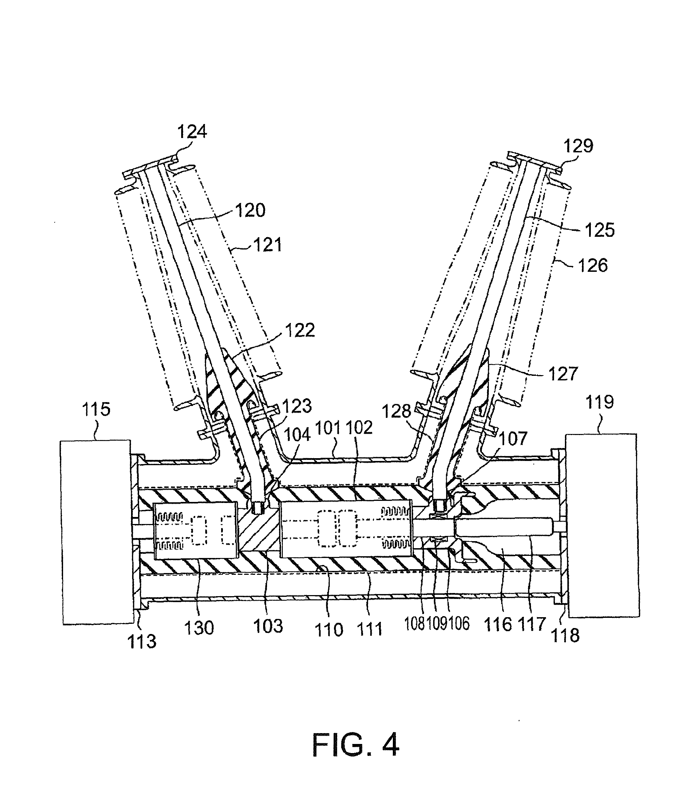

Next, a tank-type vacuum circuit breaker according to a fourth embodiment will be described with reference to Fig. 4. Fig. 4 is a sectional view showing a configuration of the tank-type vacuum circuit breaker according to the fourth embodiment. In addition, the point that the fourth embodiment is different from the third embodiment is that a second vacuum valve is used for the ground opening and closing function. In Fig. 4, the same symbols are given to the same constituent portions as the third embodiment, and the detailed description thereof will be omitted.

As shown in Fig. 4, a fixed side of a second vacuum valve 130 having a pair of contacts which are free to contact and separate is fixed to the fixed side electrode 103. A movable side of the second vacuum valve 130 is coupled to the grounding operation mechanism 115, and is connected to the ground electrode. The insulating layer 110 is provided on the outer circumference of the second vacuum valve 130.

According to the tank-type vacuum circuit breaker of the fourth embodiment, in addition to the effect of the third embodiment, the ground opening and closing function can be performed by the second vacuum valve 130 superior in closing performance and insulation performance, and thereby miniaturization thereof can be achieved. In addition, since a fixed side contact is fixed to a fixed side sealing fitting, a stroke of a movable side contact can be made long, and thereby the reliability as a grounding switch can be achieved.

According to the above-described embodiments, the external insulation of the first vacuum valve having a breaking property can be reinforced, and insulation gas suitable for the environment can be filled in the tank. In addition, it is possible to make the tank-type vacuum circuit breaker have the breaking mechanism (disconnecting mechanism) and the ground opening and closing function.

While certain embodiments have been described, these embodiments have been presented by way of example only, and are not intended to limit the scope of the inventions. Indeed, the embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A tank-type vacuum circuit breaker, comprising:
a tank (1);
a vacuum valve (2) provided in the tank (1), having a pair of contacts;
an insulating layer (9) provided on an outer circumference of the vacuum valve (2), having a fixed side interface connecting portion (10) and a movable side interface connecting portion (11);
a grounding layer (15) provided on an outer circumference of the insulating layer (9);
a fixed side bushing having an interface connecting portion (20) connected to the fixed side interface connecting portion (10);
a fixed side porcelain tube (18) to house the fixed side bushing;
a movable side bushing having an interface connecting portion (26) connected to the movable side interface connecting portion (11);
a movable side porcelain tube (24) to house the movable side bushing; and
insulation gas filled in the tank (1), the fixed side porcelain tube (18), and the movable side porcelain tube (24) at an approximately atmospheric pressure.

2. The tank-type vacuum circuit breaker, according to Claim 1, wherein:
in the fixed side bushing and the movable side bushing, electric field relaxing means are provided at portions of the fixed side porcelain tube (18) and the movable side porcelain tube (24) which face flange portions, respectively.

3. The tank-type vacuum circuit breaker, according to Claim 1, wherein:
coupling insulating layers (31, 34) of bent coupling conductors (30, 33) are connected to the fixed side interface connecting portion (10) and the movable side interface connecting portion (11), and are connected to insulating layers (19, 25) of the fixed side bushing and the movable side bushing, respectively.

4. The tank-type vacuum circuit breaker, according to Claim 1, wherein:
the insulation gas is any of dry air, nitrogen gas, and carbon dioxide gas.

5. The tank-type vacuum circuit breaker, according to Claim 1, wherein:
dielectric constants of insulating layers (19, 25) of the fixed side bushing and the movable side bushing are respectively made larger than those of the fixed side porcelain tube (18) and the movable side porcelain tube (24).

6. A tank-type vacuum circuit breaker, comprising:
a tank (101);
a first vacuum valve (102) provided in the tank (101);
a fixed side electrode (103) fixed to a fixed side of the first vacuum valve (102);
a movable side electrode (106) fixed to a movable side of the first vacuum valve (102);
an insulating layer (110) provided on outer circumferences of the first vacuum valve (102), the fixed side electrode (103), and the movable side electrode (106), having a fixed side interface connecting portion and a movable side interface connecting portion;
a grounding layer (111) provided on an outer circumference of the insulating layer (110);
a fixed side bushing having an interface connecting portion connected to the fixed side interface connecting portion;
a movable side bushing having an interface connecting portion connected to the movable side interface connecting portion;
a ground opening and closing rod (114) which moves in a ground opening and closing cavity portion (116) provided at a fixed side of the insulating layer (110), and contacts to and separates from the fixed side electrode (103);
an insulation operation rod (117) which moves in an opening and closing operation cavity portion (116) provided at a movable side of the insulating layer (110), and is coupled to a movable shaft (108) of the first vacuum valve (102); and
insulation gas filled in the tank (101) suitable for the environment.

7. The tank-type vacuum circuit breaker, according to Claim 6, wherein:
the first vacuum valve (102), the ground opening and closing rod (114), and the insulation operation rod (117) are arranged on the same axis.

8. The tank-type vacuum circuit breaker, according to Claim 6, wherein:
the insulation gas is any of dry air, nitrogen gas, and carbon dioxide gas.

9. The tank-type vacuum circuit breaker, according to Claim 6, wherein:
the first vacuum valve (102) is used for disconnection.

10. A tank-type vacuum circuit breaker, comprising:
a tank (101);
a first vacuum valve (102) provided in the tank (101);
a second vacuum valve (130) with a fixed side which is fixed to a fixed side of the first vacuum valve (102);
a grounding electrode connected to a movable shaft of the second vacuum valve (130);
an insulating layer (110) provided on outer circumferences of the first vacuum valve (102) and the second vacuum valve (130), having a fixed side interface connecting portion and a movable side interface connecting portion;
a grounding layer (111) provided on an outer circumference of the insulating layer (110);
a fixed side bushing having an interface connecting portion connected to the fixed side interface connecting portion;
a movable side bushing having an interface connecting portion connected to the movable side interface connecting portion;
an insulation operation rod (117) which moves in an opening and closing operation cavity portion (116) provided at a movable side of the insulating layer (110), and is coupled to a movable shaft (108) of the first vacuum valve (102); and
insulation gas filled in the tank (101) suitable for the environment.

11. The tank-type vacuum circuit breaker, according to Claim 10, wherein:
a fixed side contact of the second vacuum valve (130) is fixed to a fixed side sealing fitting.
